Europäisches Patentamt

European Patent Office

Office européen des brevets

(19)

(11) Numéro de publication : **0 298 808 B1**

(12) **FASCICULE DE BREVET EUROPEEN**

(45) Date de publication du fascicule du brevet :
23.10.91 Bulletin 91/43

(51) Int. Cl.$^5$ : **C01F 17/00**

(21) Numéro de dépôt : **88401528.0**

(22) Date de dépôt : **20.06.88**

(54) **Procédé d'obtention d'un oxyde cérique et oxyde cérique à nouvelles caractéristiques morphologiques.**

(30) Priorité : 26.06.87 FR 8709020

(43) Date de publication de la demande :
11.01.89 Bulletin 89/02

(45) Mention de la délivrance du brevet :
23.10.91 Bulletin 91/43

(84) Etats contractants désignés :
AT BE CH DE ES FR GB GR IT LI LU NL SE

(56) Documents cités :
EP-A- 0 153 227
EP-A- 0 207 857
EP-A- 0 239 477
LU-A- 38 182
US-A- 2 327 992

(73) Titulaire : **RHONE-POULENC CHIMIE**
**25, quai Paul Doumer**
**F-92408 Courbevoie Cédex (FR)**

(72) Inventeur : **David, Claire**
**14bis, rue Friant**
**F-75014-Paris (FR)**
Inventeur : **Seon, Françoise**
**50, avenue de la Dame Blanche**
**F-94120-Fontenay/Sous/Bois (FR)**

(74) Mandataire : **Dutruc-Rosset, Marie-Claude et**
**al**
**RHONE-POULENC INTERSERVICES Service**
**Brevets Chimie 25, Quai Paul Doumer**
**F-92408 Courbevoie Cédex (FR)**

## Description

La présente invention est relative à un procédé d'obtention d'un oxyde cérique. Plus précisément, l'invention concerne un procédé permettant d'obtenir un oxyde cérique à granulométrie contrôlée.

L'invention vise également, à titre de produits industriels nouveaux, un oxyde cérique à nouvelles caractéristiques morphologiques.

Dans de nombreuses applications telles que la catalyse, la céramique, la luminescence, etc... on constate à l'heure actuelle, une demande pressante de poudre d'oxyde cérique à morphologie contrôlée et, notamment, un oxyde cérique à granulométrie fine et resserrée.

Il est décrit, dans FR-A 2583034, un oxyde cérique présentant une faible surface spécifique inférieure à 10 m²/g (mesurée après calcination entre 400 et 600°C), et des dimensions d'agrégats allant de 0,2 à 5,0 μm. La taille desdits agrégats exprimée par le diamètre moyen varie de 0,5 à 1,5 μm : le diamètre moyen étant un diamètre tel que 50% en poids des agrégats ont un diamètre supérieur ou inférieur au diamètre moyen. Toutefois, on note que l'oxyde cérique obtenu présente une distribution de la taille de ses agrégats relativement étalée.

Il est également décrit dans Ep 153227 un procédé de préparation d'un oxyde cérique consistant à hydrolyser un sel de cérium IV en milieu acide et à calciner le précipité obtenu après séparation et séchage. L'oxyde cérique obtenu présente des agrégats dont le diamètre moyen varie entre 0,5 et 1,5 μm avec des écarts type définissant la répartition granulométrique compris dans un intervalle allant de 1,0 à 2,5. Ces produits présentent un diamètre moyen élevé.

Enfin, un procédé et un nouveau composé de cérium IV est décrit dans Ep 239477. Ce composé est hydroxynitrate de cérium IV dispersable dans l'eau, obtenu par hydrolyse en milieu acide d'un composé de cérium IV.

Un des objetifs de la présente invention est de fournir un procédé qui permet d'obtenir un oxyde cérique à granulométrie contrôlée.

Un autre objectif de l'invention est de disposer d'un procédé qui conduit à l'obtention d'un oxyde cérique à granulométrie fine et resserrée.

Enfin, un dernier objectif est de parvenir à un oxyde cérique submicronique.

Pour atteindre la premier objectif, la présente invention propose un procédé de préparation d'un oxyde cérique à granulométrie contrôlée caractérisé par le fait qu'il consiste à hydrolyser une solution aqueuse d'un sel de cérium IV en milieu acide, en présence d'une dispersion colloïdale aqueuse d'un composé de cérium IV ; à séparer le précipité obtenu ; puis à le soumettre à un traitement thermique.

La demanderesse a trouvé un procédé de préparation d'un oxyde cérique qui permet de contrôler la taille des particules et leur distribution en faisant appel, à titre de régulateur de la croissance des particules, à une dispersion colloïdale d'un composé de cérium IV que l'on désignera par la suite par le vocable "sol".

La demanderesse a découvert, de manière inattendue, que les caractéristiques morphologiques de l'oxyde cérique obtenu dépendaient des caractéristiques de la dispersion colloïdale aqueuse du composé de cérium IV et que la granulométrie de l'oxyde cérique obtenu pouvait être contrôlée en jouant notamment sur la morphologie (en particulier la taille) des colloïdes.

Pour la clarté de l'exposé, on définit d'abord le procédé d'obtention de l'oxyde cérique par hydrolyse acide d'un sel de cérium IV et ensuite les moyens permettant d'obtenir un oxyde cérique dont la distribution de la taille de ses particules est contrôlée et qui sont en relation avec le choix des caractéristiques du sol de cérium.

Dans la première étape, on réalise l'hydrolyse d'une solution aqueuse d'un sel de cérium IV au cours de laquelle on introduit le sol d'un composé de cérium IV.

La solution aqueuse de cérium IV soumise à l'hydrolyse peut être une solution aqueuse de nitrate cérique. Ladite solution peut contenir sans inconvénient du cérium à l'état céreux, mais il est souhaitable pour avoir un bon rendement de précipitation qu'elle contienne au moins 85% de cérium IV.

La solution de sel de cérium est choisie de telle sorte qu'elle ne contienne pas d'impuretés qui puissent se retrouver, dans le produit final. Il peut être avantageux de mettre en jeu une solution de sel de cérium présentant un degré de pureté supérieure à 99%.

La concentration de la solution de sel de cérium n'est pas un facteur critique, selon l'invention. Lorsqu'elle est exprimée en cérium IV, elle peut varier entre 0,3 et 3 moles par litre, de préférence, entre 0,5 à 1,5 moles/litre.

A titre de matières premières, on peut faire appel à une solution de nitrate cérique obtenue par action de l'acide nitrique sur un oxyde cérique hydraté préparé d'une manière classique, par réaction d'une solution d'un sel céreux par exemple, le carbonate céreux et d'une solution d'ammoniaque en présence d'un agent oxydant, de préférence, l'eau oxygénée.

La solution de nitrate cérique obtenue selon le procédé d'oxydation électrolytique d'une solution de nitrate céreux et qui est décrite dans FR-A 2570087 (n° 8413641) constitue une matière première de choix.

Le milieu d'hydrolyse est constitué par de l'eau dont la nature n'est pas critique et qui est, de préférence, de l'eau distillée ou permutée.

L'acidité peut être par ajout d'un acide minéral. D'une manière préférentielle, on choisit l'acide nitrique. On peut utiliser un acide qui peut être concentré ou dilué, par exemple, jusqu'à $10^{-2}$ N.

Elle peut également provenir de la solution de nitrate cérique qui peut être légèrement acide et avoir une normalité variant entre 0,01 N et 5 N, de préférence, entre 0,1 N et 1 N.

La quantité d'ions H+ introduite pour la réaction d'hydrolyse est telle que le rapport molaire $[H^+]/[Ce^{IV}$ éq.] est supérieur ou égal à 0 et inférieur ou égal à 3.

On choisit, de préférence, un rapport molaire $[H^+]/[Ce^{IV}$ éq.] compris entre 0 et 2,0.

La proportion entre la solution aqueuse de sel de cérium IV et le milieu d'hydrolyse (essentiellement l'eau) est telle que la concentration finale équivalente en cérium IV est comprise entre 0,1 mole/litre et 1 mole/litre, de préférence, entre 0,2 et 0,6 mole/litre.

On définit la concentration finale équivalente en cérium IV par l'équation suivante :

$$[Ce^{IV} \text{ éq.}] = \frac{[Ce^{IV}] \times V'}{V + V'}$$

dans laquelle :
— $[Ce^{IV}]$ est la concentration en moles/litre de la solution du sel de cérium IV
— V représente le volume d'eau éventuellement additionné d'acide
— V' représente le volume de la solution de cérium IV.

L'hydrolyse du sel de cérium IV réalisée dans les conditions telles que décrites précédemment est effectuée entre 70°C et 120°C et de préférence à la température de reflux du milieu réactionnel qui se situe vers 100°C.

Il est plus aisé de travailler à la température de reflux qui est facile à contrôler et à reproduire.

On peut conduire l'étape d'hydrolyse selon plusieurs variantes. Par exemple, on peut additionner en une seule fois, graduellement ou en continu la solution de sel de cérium IV dans l'eau contenant éventuellement de l'acide portée à la température réactionnelle ou inversement.

On peut également conduire le procédé en continu. A cet effet, on effectue simultanément et en continu le mélange de la solution de sel de cérium IV et du milieu d'hydrolyse et l'on chauffe en continu le mélange, à la température réactionnelle choisie.

Selon un mode de réalisation préférée de l'invention, on mélange la solution de sel de cérium IV et le milieu d'hydrolyse puis l'on porte ledit mélange maintenu sous agitation à la température réactionnelle.

Conformément au procédé de l'invention, on introduit, au cours de l'étape d'hydrolyse, un sol aqueux de composé de cérium IV.

Les sols aqueux d'un composé de cérium IV susceptibles d'être mis en oeuvre répondent à la formule générale (I) :

$$Ce\,(M)_z\,(OH)_x\,(NO_3)_y,\, p\,CeO_2,\, n\,H_2O \quad (I)$$

dans laquelle :
— M représente un métal alcalin ou un radical ammonium quaternaire
— z est compris entre 0 et 0,2
— y est compris entre 0 et 1,5
— x est tel que $x = 4 - y + z$
— p est compris entre 0 et 2,0
— n est compris entre 0 et environ 20

La concentration du composé de cérium IV dans le sol n'est pas critique. Lorsqu'elle est exprimée en $CeO_2$, elle se situe entre 0,1 et 2,5 moles/litre et, de préférence, entre 0,5 et 1 mole/litre.

Le taux de cérium IV sous forme colloïdale est supérieur à 95%, mais l'invention n'exclut pas le sol dans lequel il y aurait présence de cérium IV sous forme ionique. On choisit de préférence un taux de cérium compris entre 99 et 100%.

La taille des colloïdes présents dans le sol peut varier dans une gamme assez large. Généralement, le diamètre hydrodynamique moyen des colloïdes déterminé par diffusion quasi-élastique de la lumière selon la méthode décrite par Michael L. Mc Connell dans Analytical Chemistry 53, n° 81007 A (1981), peut varier entre 50 Å et 2000 Å.

La quantité de sol aqueux d'un composé de cérium IV exprimée par rapport à la quantité du sel de cérium IV rapportée en $CeO_2$, peut varier entre 0,1 et 20% en poids : la borne supérieure n'est pas critique mais il n'y a aucun intérêt à mettre en oeuvre une quantité supérieure.

D'une manière préférentielle, on met en oeuvre le sol aqueux de composé de cérium IV, à raison de 1 à 5% en poids.

Selon le procédé de l'invention, ledit sol est introduit au cours de l'hydrolyse du sel de cérium IV, mais avant le début de précipitation de l'hydrate cérique.

D'une manière préférentielle, on additionne le sol aqueux du composé de cérium IV, dans le milieu réactionnel porté à une température d'au moins 70°C et de préférence comprise entre 75°C et 100°C.

Dans le cas où la température d'addition du sol aqueux est inférieure à la température réactionnelle d'hydrolyse, on poursuit la montée de la température.

Une fois la température réactionnelle atteinte, on la maintient entre 2 et 8 heures et, de préférence, entre 3 et 6 heures. On observe la formation d'un précipité, dès l'introduction du sol aqueux de cérium.

Le rendement de la réaction d'hydrolyse dépend de la concentration finale équivalente en cérium IV, du rapport molaire $[H^+]/[Ce^{IV}$ éq.] et de la quantité de colloïdes introduite : il est d'autant plus élevé que le milieu réactionnel est plus dilué, que le rapport molaire $[H^+]/[Ce^{IV}$ éq.] est plus faible et que la quantité de colloïdes est plus grande. A titre d'exemples, on précisera que, pour un rapport molaire $[H^+]/[Ce^{IV}$ éq.] égal à 1,5, une quantité de 3% de colloïdes, à savoir une dispersion aqueuse colloïdale d'un composé de cérium IV à 1 mole/litre et présentant des colloïdes ayant un diamètre moyen de 500 Å et pour les concentrations finales équivalentes de 0,23 M, 0,35 M et 0,46 M, les rendements obtenus sont respectivement de 96%, 80%, et 30%.

La deuxième étape du procédé consiste à séparer le précipité obtenu selon les techniques classiques de séparation solide-liquide : filtration, décantation, centrifugation ou essorage.

Cette séparation est effectuée généralement à température ambiante.

Le produit obtenu après séparation, peut être soumis directement à l'opération de calcination, ou bien, il peut subir un séchage préalable.

Les conditions de séchage peuvent varier dans de larges limites. C'est ainsi que la température peut être choisie entre 15°C et 100°C, de préférence, entre la température ambiante et 50°C. La durée de séchage est choisie, de préférence, entre 5 et 48 heures afin d'obtenir un produit sec (n = 0). L'opération de séchage peut être faite à l'air ou sous pression réduite, par exemple, entre 1 et 100 mm de mercure (133,322 Pa et 13332,2 Pa).

Une variante préférée de l'invention consiste à soumettre le produit séparé à un traitement de lyophilisation. Il est obtenu par une congélation brusque du produit à une température située, de préférence, entre − 10°C et − 30°C suivie par une sublimation sous pression réduite : ladite pression n'étant pas critique et choisie de préférence entre 0,001 et 0,5 atmosphère. A titre indicatif, on précisera que le produit lyophilisé n'est pas complètement sec : n étant compris entre environ 5 et environ 10.

Il est plus intéressant d'effectuer une lyophilisation qu'une opération de séchage, car le produit obtenu après calcination, n'a pas tendance à motter comme cela se produit lorsque le traitement de lyophilisation n'a pas lieu. Dans pareil cas, il est souhaitable d'effectuer un démottage du produit, soit manuellement, soit par délitage des agglomérats aux ultra-sons générés par un appareil quelconque à ultra-sons.

Selon la dernière étape du procédé, on soumet le produit éventuellement séché, à une calcination à une température choisie entre 300°C et 1000°C, mais de préférence, entre 350 et 800°C. Elle dure environ de 30 minutes à 10 heures et, de préférence, de 4 à 8 heures.

Comme mentionné précédemment, la morphologie des colloïdes du sol du composé du cérium IV, induit une certaine morphologie de l'oxyde cérique obtenu et influe notamment sur sa granulométrie.

Selon une variante d'exécution de l'invention, on définit le sol aqueux du composé de cérium IV permettant d'obtenir un oxyde cérique dont le diamètre moyen de ses particules ou agrégats est submicronique, c'est-à-dire inférieur à 1 µm.

A titre de matières de départ convenant pour l'obtention d'un tel oxyde cérique, on peut avoir recours plus particulièrement aux sols qui sont décrits dans la demande de brevet européen 87 400 600.0 et qui sont préparés par mise en dispersion dans l'eau d'un composé de cérium IV répondant à la formule (II)

$$Ce\,(OH)_x\,(NO_3)_y,\,pCeO_2,\,nH_2O \quad (II)$$

dans laquelle :
— x est tel que x = 4 − y
— y est compris entre 0,35 et 1,5
— p est supérieur ou égal à 0 et inférieur ou égal à 2,0
— n est supérieur ou égal à 0 et inférieur ou égal à environ 20

Le sol présente des tailles de colloïdes pouvant varier dans une gamme assez large allant de 100 à 1000 Å.

Par basification jusqu'à obtention d'un pH de 3,0, on peut obtenir des colloïdes plus gros dont le diamètre hydrodynamique se situe alors entre 300 et 2000 Å.

L'obtention des sols ayant les tailles de colloïdes précitées consiste à mettre en dispersion dans l'eau, le composé de cérium IV de formule (II) qui est directement dispersable dans l'eau. Ledit composé est dispersé sous agitation en milieu aqueux ou en milieu légèrement acide de telle sorte qu'il conduise à un sol dont le pH est compris entre 1 et 2,5.

Le composé de cérium IV de formule (II) est préparé selon un procédé qui consiste dans une première étape, à hydrolyser une solution aqueuse d'un sel de cérium IV en milieu acide, dans une deuxième étape, à séparer le précipité obtenu et dans une troisième étape, qui n'est pas obligatoire, à le traiter thermiquement.

Dans la première étape, on réalise, l'hydrolyse d'une solution aqueuse d'un sel de cérium IV. Elle est conduite selon les mêmes conditions que celles décrites à l'étape d'hydrolyse du procédé de l'invention. Les caractéristiques définies précédemment des solutions de départ, solution de sel de cérium IV et le milieu d'hydrolyse ainsi que les modes de mises en oeuvre restent valables.

La quantité d'ions H⁺ introduite pour la réaction d'hydrolyse est telle que le rapport molaire $[H^+]/[Ce^{IV}$ éq.] est supérieur ou égal à 0 et inférieur ou égal à 3 et, de préférence, compris entre 0,4 et 2,5.

Au cours de la réaction d'hydrolyse, on observe la formation d'un précipité. La durée de la réaction peut varier entre 2 et 8 heures et, de préférence, entre 3 et 6 heures.

Les autres étapes du procédé de préparation du composé de cérium IV dispersable dans l'eau consiste à séparer le précipité selon les techniques classiques de séparation solide/liquide puis à soumettre éventuellement le précipité à un traitement thermique.

Cette opération est facultative, car il a été trouvé que le précipité séparé suite à la première étape d'hydrolyse était directement dispersable dans l'eau et qu'il était possible d'obtenir directement un sol aqueux par mise en suspension dans l'eau du précipité séparé sans qu'il soit nécessaire de le sécher. En effet, une étape de séchage n'est pas indispensable et une élimination de toute l'eau libre n'est pas requise.

Les conditions de séchage peuvent varier dans de larges limites. C'est ainsi que la température peut être choisie entre 15°C et 100°C, de préférence, entre la température ambiante et 50°C. La durée de séchage est choisie de préférence entre 5 et 48 heures afin d'obtenir un produit sec (n = 0). L'opération de séchage peut être faite à l'air ou sous pression réduite, par exemple, entre 1 et 100 mm de mercure (133,322 Pa et 13332,2 Pa).

Quel que soit le degré d'hydratation du composé de cérium IV répondant à la formule (II), on obtient un composé de cérium IV directement dispersable dans l'eau et qui, par mise en dispersion dans l'eau, conduit à un sol ayant des colloïdes présentant un diamètre hydrodynamique variant entre 100 et 1000 Å.

Conformément au procédé de l'invention, le fait d'introduire un sol aqueux d'un composé de cérium IV, au cours de la précipitation d'un hydrate de cérium obtenu par hydrolyse en milieu acide conduit à l'obtention d'un oxyde cérique à nouvelles caractéristiques morphologiques.

En effet, la mise en oeuvre du sol aqueux que l'on vient de définir permet d'obtenir un oxyde cérique présentant une granulométrie fine et resserrée : le diamètre moyen des agrégats varie entre 0,2 et 1 μm et, de préférence, entre 0,2 et 0,4 μm.

Tous les résultats d'analyses granulométriques donnés dans la présente demande sont déterminés selon une méthode de sédimentation précisée ci-après.

La taille des agrégats s'échelonne entre 0,1 et 2 μm environ : la fraction granulométrique supérieure à 2 μm étant inférieure à 0,5%.

Le caractère monodisperse de la distribution de la taille des agrégats est mis en évidence par l'indice de dispersion défini par le rapport $\dfrac{d_{84} - d_{16}}{2d_{50}}$ qui est compris dans un intervalle allant de 0,3 à 0,5 et, de préférence, de 0,3 à 0,4.

Il est remarquable d'obtenir un oxyde cérique aussi fin directement, sans faire appel à une opération de broyage.

L'analyse par diffraction X montre que c'est un produit cristallisé qui présente une phase cristalline de type $CeO_2$ ayant un paramètre de taille variant de 5,41 Å à 5,44 Å et un taux de cristallisation, le plus souvent, compris entre 75 et 85%.

A titre indicatif, on précisera que dans la partie cristallisée, la taille des cristallites d'un oxyde obtenu après calcination à 600°C est de 80 à 100 Å et après calcination à 1000°C, aux environs de 500 Å.

Les exemples 1 à 4 qui suivent, illustrent l'invention sans toutefois la limiter.

Dans les exemples suivants, les pourcentages donnés sont exprimés en poids.

Avant de détailler les exemples, on précisera que l'analyse granulométrique est effectuée à l'aide de l'instrument SEDIGRAPH 5000D.

Cet appareil mesure le taux de sédimentation des particules en suspension et présente automatiquement ces résultats en une distribution en pourcentages cumulatifs en fonction des diamètres équivalents sphériques (basée sur la loi de Stokes).

L'appareil détermine, par le truchement d'un faisceau de rayons X très fin, la concentration en particules retenues en suspension à différentes hauteurs de sédimentation, comme une fonction du temps. Le logarithme de l'intensité du rayon X est électroniquement généré et enregistré puis présenté linéairement en "pourcentages cumulatifs" (en plus petits que) sur l'axe Y d'un enregistreur XY. Pour limiter le temps requis par l'analyse, la cellule de sédimentation est continuellement en mouvement de sorte que la profondeur de la cellule de sédimentation est inversement proportionnelle au temps. Le mouvement de la cellule est synchronisé avec l'axe des X de l'enregistreur, pour indiquer directement le diamètre équivalent sphérique correspondant au temps écoulé à une profondeur de sédimentation donnée, l'information de la dimension est présentée sur une feuille logarithmique à 3 modules.

Pour chaque poudre d'oxyde cérique, on détermine $d_{50}$, $d_{16}$, $d_{84}$, ce qui permet de calculer l'indice de dispersion défini ci-dessus.

## EXEMPLE 1

### a) Préparation d'un sol aqueux d'un composé de cérium IV

Dans un ballon tricol de 2 litres muni d'un thermomètre, d'un dispositif d'agitation, d'un système d'introduction de réactifs, d'un réfrigérant ascendant et équipé également d'un dispositif de chauffage, on introduit à température ambiante :

— 1081 cm³ d'eau distillée,

— 418 cm³ d'une solution de nitrate cérique préparée par électrolyse conformément à FR-A 2570087 et contenant 1,25 moles/litre de cérium IV, 0,05 mole/litre de cérium III et ayant une acidité libre de 0,5 N.

Dans le milieu d'hydrolyse, la concentration en cérium IV exprimée en $CeO_2$ est égale à 60 g/litre et le rapport molaire $[H^+]/[Ce^{IV}\ \text{éq.}]$ est égal à 0,4.

On maintient le milieu réactionnel sous agitation et au reflux pendant 4 heures.

On effectue la filtration sur verre fritté (porosité n° 3).

On recueille 100 g d'un précipité jaune.

On additionne 57 g dudit précipité dans de l'eau distillée mise en oeuvre en quantité suffisante pour obtenir un volume de 200 cm³.

On obtient un sol ayant une concentration en cérium IV exprimée en $CeO_2$ de 172 g/litre (1 M) et présentant un diamètre moyen de colloïdes de 550 Å.

b) Préparation de l'oxyde cérique

Dans un appareillage tel que décrit dans le paragraphe a), on introduit à température ambiante :
— 1081 cm³ d'eau distillée,
— 418 cm³ de la solution de nitrate cérique caractérisée en a).

On chauffe le mélange sous agitation.

Lorsque la température dans le réacteur atteint 75°C-80°C, on ajoute 16 cm³ du sol aqueux d'un composé de cérium IV préparé selon a).

Dans le milieu réactionnel, la concentration en cérium IV exprimée en $CeO_2$ est égale à 61,8 g/l et le rapport molaire $[H^+]/[Ce^{IV}$ éq.] égal à 0,4.

On maintient le milieu réactionnel sous agitation et au reflux pendant 4 heures.

On effectue la filtration sur verre fritté n° 4.

On détermine un rendement de la réaction d'hydrolyse de 95%.

On sèche le produit obtenu par lyophilisation pendant 24 heures dans un appareil lyophilisateur CHRIST type 1060.

On met le produit lyophilisé dans une nacelle en alumine et on le calcine dans un four à moufles, 6 heures à 600°C.

On recueille 83 g d'un précipité jaune.

L'oxyde cérique obtenu présente les caractéristiques suivantes :
— % $CeO_2$ = 98%
— taux de cristallisation d'environ 80%
— diamètre moyen des agrégats : 0,3 à 0,4 μm
— indice de dispersion : $\dfrac{d_{84} - d_{16}}{2d_{50}} = 0,32$

EXEMPLE 2

a) Préparation d'un sol aqueux d'un composé de cérium IV

Dans un ballon tricol de 2 litres muni d'un thermomètre, d'un dispositif d'agitation, d'un système d'introduction de réactifs, d'un réfrigérant ascendant et équipé également d'un dispositif de chauffage, on introduit à température ambiante :
— 1081 cm³ d'acide nitrique 0,289 N,
— 418 cm³ d'une solution de nitrate cérique préparée par électrolyse conformément à FR-A 2570087 et contenant 1,25 moles/litre de cérium IV, 0,05 mole/litre de cérium III et ayant une acidité libre de 0,5 N.

Dans le milieu d'hydrolyse, le concentration en cérium IV exprimée en $CeO_2$ est égale à 60 g/litre et le rapport molaire $[H^+]/[Ce^{IV}$ éq.] est égal à 1,5.

On maintient le milieu réactionnel sous agitation et au reflux pendant 4 heures.

On effectue la filtration sur verre fritté (porosité n° 3).

On recueille 80 g d'un précipité jaune.

On additionne 57 g dudit précipité dans de l'eau distillée mise en oeuvre en quantité suffisante pour obtenir un volume de 200 cm³.

On obtient un sol ayant une concentration en cérium IV exprimée en $CeO_2$ de 172 g/litre (1 M) et présentant un diamètre moyen de colloïdes de 600 Å.

b) Préparation de l'oxyde cérique

Dans un appareillage tel que décrit dans le paragraphe a), on introduit à température ambiante :
– 1081 cm³ d'eau distillée,
– 418 cm³ de la solution de nitrate cérique caractérisée en a).

On chauffe le mélange sous agitation.

Lorsque la température dans le réacteur atteint 85°C-90°C, on ajoute 16 cm³ du sol aqueux d'un composé de cérium IV préparé selon a).

Dans le milieu réactionnel, la concentration en cérium IV exprimée en $CeO_2$ est égale à 61,8 g/l et le rapport molaire $[H^+]/[Ce^{IV}$ éq.] égal à 1,5.

On maintient le milieu réactionnel sous agitation et au reflux pendant 4 heures.

On effectue la filtration sur verre fritté n° 4.

On détermine un rendement de la réaction d'hydrolyse de 75%.

On sèche le produit obtenu par lyophilisation pendant 24 heures dans un appareil lyophilisateur CHRIST type 1060.

On met le produit lyophilisé dans une nacelle en alumine et on le calcine dans un four à moufles, 6 heures à 600°C.

On recueille 72 g d'un précipité jaune.

L'oxyde cérique obtenu présente les caractéristiques suivantes :
— % $CeO_2$ = 98%
— taux de cristallisation d'environ 90%
— diamètre moyen des agrégats : 0,3 μm
— indice de dispersion : $\dfrac{d_{84} - d_{16}}{2d_{50}} = 0,4$

EXEMPLE 3

a) Préparation d'un sol aqueux d'un composé de cérium IV

Dans un appareillage tel que décrit dans l'exemple 1, on introduit à température ambiante :
— 1220 cm³ d'eau distillée,
— 279 cm³ d'une solution de nitrate cérique préparée par électrolyse conformément à FR-A 2570087 et contenant 1,25 moles/litre de cérium IV, 0,05 mole/litre de cérium III et ayant une acidité libre de 0,5 N.

Dans le milieu d'hydrolyse, la concentration en cérium IV exprimée en $CeO_2$ est égale à 40 g/litre et le rapport molaire $[H^+]/[Ce^{IV}$ éq.] est égal à 0,4.

On maintient le milieu réactionnel sous agitation et au reflux pendant 4 heures.

On effectue la filtration sur verre fritté (porosité n° 3).

On recueille 65 g d'un précipité jaune.

On additionne 57 g dudit précipité dans de l'eau distillée mise en oeuvre en quantité suffisante pour obtenir un volume de 200 cm³.

On obtient un sol ayant une concentration en cérium IV exprimée en $CeO_2$ de 172 g/litre (1 M) et présentant un diamètre moyen de colloïdes de 220 Å.

b) Préparation de l'oxyde cérique

Dans un appareillage tel que décrit dans l'exemple 1, on introduit à température ambiante :
— 1081 cm³ d'acide nitrique 0,289 N,
— 418 cm³ de la solution de nitrate cérique caractérisée en a).

On chauffe le mélange sous agitation.

Lorsque la température dans le réacteur atteint 85°C-90°C, on ajoute 16 cm³ du sol aqueux d'un composé de cérium IV préparé selon a).

On maintient le milieu réactionnel sous agitation et au reflux pendant 4 heures.

Dans le milieu réactionnel, la concentration en cérium IV exprimée en $CeO_2$ est égale à 62 g/l et le rapport molaire $[H^+]/[Ce^{IV}$ éq.] égal à 1,5.

On effectue la filtration sur verre fritté n° 4.

On détermine un rendement de la réaction d'hydrolyse de 75%.

On sèche le produit obtenu par lyophilisation pendant 24 heures dans un appareil lyophilisateur CHRIST type 1060.

On met le produit lyophilisé dans une nacelle en alumine et on le calcine dans un four à moufles, 6 heures à 600°C.

On recueille 70 g d'un précipité jaune.

L'oxyde cérique obtenu présente les caractéristiques suivantes :
— % $CeO_2$ = 98%
— diamètre moyen des agrégats : 0,2 µm

— indice de dispersion : $\dfrac{d_{84} - d_{16}}{2d_{50}} = 0,3$

EXEMPLE 4

a) Préparation d'un sol aqueux d'un composé de cérium IV

Dans un appareillage tel que décrit dans l'exemple 1, on introduit à température ambiante :
— 1220 cm³ d'acide nitrique 0,315 N,
— 279 cm³ d'une solution de nitrate cérique préparée par électrolyse conformément à FR-A 2570087 et contenant 1,25 moles/litre de cérium IV, 0,05 mole/litre de cérium III et ayant une acidité libre de 0,5 N.

Dans le milieu d'hydrolyse, la concentration en cérium IV exprimée en $CeO_2$ est égale à 40 g/litre et le rapport molaire $[H^+]/[Ce^{IV}$ éq.] est égal à 1,5.

On maintient le milieu réactionnel sous agitation et au reflux pendant 4 heures.

On effectue la filtration sur verre fritté (porosité n° 3).

On recueille 58 g d'un précipité jaune.

On additionne 57 g dudit précipité dans de l'eau distillée mise en oeuvre en quantité suffisante pour obtenir un volume de 200 cm³.

On obtient un sol ayant une concentration en cérium IV exprimée en $CeO_2$ de 172 g/litre (1 M) et présentant un diamètre moyen de colloïdes de 500 Å.

b) Préparation de l'oxyde cérique

Dans un appareillage tel que décrit dans l'exemple 1, on introduit à température ambiante :
— 1081 cm³ d'acide nitrique 0,289 N,
— 418 cm³ de la solution de nitrate cérique caractérisée en a).

On chauffe le mélange sous agitation.

Lorsque la température dans le réacteur atteint 85°C-90°C, on ajoute 16 cm³ du sol aqueux d'un composé de cérium IV préparé selon a).

On maintient le milieu réactionnel sous agitation et au reflux pendant 4 heures.

Dans le milieu réactionnel, la concentration en cérium IV exprimée en $CeO_2$ est égale à 62 g/l et le rapport molaire $[H^+]/[Ce^{IV}$ éq.] égal à 1,5.

On effectue la filtration sur verre fritté n° 4.

On détermine un rendement de la réaction d'hydrolyse de 95%.

On sèche le produit obtenu par lyophilisation pendant 24 heures dans un appareil lyophilisateur CHRIST type 1060.

On met le produit lyophilisé dans une nacelle en alumine et on le calcine dans un four à moufles, 6 heures à 600°C.

On recueille 57 g d'un précipité jaune.

L'oxyde cérique obtenu présente les caractéristiques suivantes :
— % $CeO_2$ = 98%
— diamètre moyen des agrégats : 1 μm
— indice de dispersion : $\dfrac{d_{84} - d_{16}}{2d_{50}}$ = 0,4

## Revendications

1. Procédé de préparation d'un oxyde cérique à granulométrie contrôlée consistant à hydrolyser une solution aqueuse d'un sel de cérium IV en milieu acide, en présence d'une dispersion colloïdale aqueuse d'un composé de cérium IV ; à séparer le précipité obtenu ; puis à le soumettre à un traitement thermique.

2. Procédé selon la revendication 1 caractérisé par le fait que la solution aqueuse de sel de cérium IV est une solution aqueuse de nitrate cérique.

3. Procédé selon l'une des revendications 1 et 2 caractérisé par le fait que la solution aqueuse de sel de cérium IV est une solution provenant de l'oxydation électrochimique d'une solution de nitrate céreux ou une solution obtenue par action de l'acide nitrique sur un oxyde cérique hydraté.

4. Procédé selon l'une des revendications 1 à 3 caractérisé par le fait que le concentration de la solution de sel de cérium exprimée en cérium IV est comprise entre 0,3 et 3 moles par litre.

5. Procédé selon l'une des revendications 1 à 4 caractérisé par le fait que le milieu d'hydrolyse est de l'eau distillée ou permutée.

6. Procédé selon l'une des revendications 1 à 5 caractérisé par le fait que le rapport molaire $[H^+]/[Ce^{IV}$ éq.] est supérieur ou égal à 0 et inférieur ou égal à 3.

7. Procédé selon la revendication 6 caractérisé par le fait que ledit rapport est compris entre 0 et 2,0.

8. Procédé selon la revendication 6 caractérisé par le fait que l'acidité est apportée par le l'acide nitrique.

9. Procédé selon la revendication 6 caractérisé par le fait que l'acidité est apportée par une solution de nitrate cérique ayant une acidité de 0,01 N à 5 N.

10. Procédé selon l'une des revendications 1 à 9 caractérisé par le fait que la proportion entre la solution aqueuse de sel de cérium IV et le milieu d'hydrolyse est telle que la concentration finale équivalente en cérium IV est comprise entre 0,1 et 1,0 mole/litre.

11. Procédé selon la revendication 10 caractérisé par le fait que la concentration finale équivalente en cérium IV est comprise entre 0,2 et 0,6 mole/litre.

12. Procédé selon l'une des revendications 1 à 11 caractérisé par le fait que la température du milieu réactionnel est comprise entre 70°C et 120°C environ.

13. Procédé selon la revendication 12 caractérisé par le fait que la température du milieu réactionnel est la température de son reflux.

14. Procédé selon l'une des revendications 12 et 13 caractérisé par le fait que l'on additionne en une seule fois, graduellement ou en continu, la solution de sel de cérium IV dans l'eau contenant éventuellement de l'acide portée à la température réactionnelle.

15. Procédé selon l'une des revendications 12 et 13 caractérisé par le fait que l'on mélange la solution de sel de cérium IV et le milieu d'hydrolyse puis l'on porte ledit mélange maintenu sous agitation à la température réactionnelle.

16. Procédé selon l'une des revendications 12 et 13 caractérisé par le fait que l'on effectue simultanément et en continu le mélange de la solution de sel de cérium IV et du milieu d'hydrolyse et que l'on chauffe en continu le mélange à la température réactionnelle.

17. Procédé selon la revendication 1 caractérisé par le fait que la dispersion colloïdale aqueuse du composé de cérium IV mise en oeuvre répond à la formule générale (I) :

$$Ce\,(M)_z\,(OH)_x\,(NO_3)_y,\ pCeO_2,\ nH_2O \qquad (I)$$

dans laquelle :
— M représente un métal alcalin ou un radical ammonium quaternaire
— z est compris entre 0 et 0,2
— y est compris entre 0 et 1,5
— x est tel que x = 4 − y + z
— p est compris entre 0 et 2,0
— n est compris entre 0 et environ 20

18. Procédé selon la revendication 17 caractérisé par le fait que la concentration du composé de cérium IV dans ladite dispersion colloïdale varie entre 0,1 et 2,5 moles/litre.

19. Procédé selon la revendication 18 caractérisé par le fait que ladite concentration est comprise entre 0,5 et 1 mole/litre.

20. Procédé selon la revendication 17 caractérisé par le fait que le taux de cérium sous forme colloïdale dans ladite dispersion est compris entre 99 et 100%.

21. Procédé selon la revendication 17 caractérisé par le fait que les colloïdes présentent un diamètre hydrodynamique moyen variant entre 50 et 2000 Å.

22. Procédé selon l'une des revendications 1 à 21 caractérisé par le fait que la quantité de sol aqueux d'un composé de cérium IV exprimée par rapport à la quantité du sel de cérium IV rapportée en $CeO_2$ varie entre 0,1 et 20% en poids.

23. Procédé selon la revendication 22 caractérisé par le fait que ladite quantité est comprise entre 1 et 5% en poids.

24. Procédé selon l'une des revendications 1 à 23 caractérisé par le fait que le sol aqueux d'un composé de cérium IV est introduit dans le milieu réactionnel porté à une température d'au moins 70°C.

25. Procédé selon la revendication 24 caractérisé par le fait que ladite température est comprise entre 75°C et 100°C.

26. Procédé selon l'une des revendications 1 à 25 caractérisé par le fait que la durée de la réaction d'hydrolyse varie entre 2 et 8 heures.

27. Procédé selon la revendication 1 caractérisé par le fait que l'on effectue une étape de séchage à l'air ou sous pression réduite de l'ordre de 1 à 100 mm de mercure, à une température comprise entre 15°C et 100°C.

28. Procédé selon la revendication 27 caractérisé par le fait que la durée du séchage varie entre 5 et 48 heures.

29. Procédé selon la revendication 1 caractérisé par le fait que l'on effectue un séchage du précipité séparé par un traitement de lyophilisation.

30. Procédé selon la revendication 29 caractérisé par le fait que ledit traitement consiste à effectuer une congélation entre − 10°C et − 30°C, puis une sublimation sous pression réduite comprise entre 0,001 et 0,5 atmosphère.

31. Procédé selon l'une des revendications 1 à 30 caractérisé par le fait que l'on effectue une étape de calcination à une température comprise entre 300°C et 1000°C.

32. Procédé selon la revendication 31 caractérisé par le fait que la température de calcination est comprise entre 350°C et 800°C.

33. Procédé selon l'une des revendications 31 et 32 caractérisé par le fait que la durée de calcination varie entre 30 minutes et 10 heures.

34. Oxyde cérique caractérisé en ce qu'il présente un diamètre moyen des agrégats variant entre 0,2 et 1 μm et un indice de dispersion de la taille des agrégats variant entre 0,3 et 0,5 ledit indice étant déterminé par l'expression

$$\frac{d_{84} - d_{16}}{2d_{50}}$$

35. Oxyde cérique selon la revendication 34 caractérisé par le fait que le diamètre moyen des agrégats est compris entre 0,2 et 0,4 μm.

36. Oxyde cérique selon la revendication 34 caractérisé par le fait que ledit indice est compris entre 0,3 et 0,4.

37. Procédé d'obtention de l'oxyde cérique décrit dans l'une des revendications 34 à 36 selon le procédé décrit dans l'une des revendications 1 à 33 caractérisé par le fait qu'il consiste à mettre en oeuvre une dispersion aqueuse colloïdale d'un composé de cérium IV préparée par mise en dispersion dans l'eau d'un composé de cérium IV répondant à la formule (II) :

$$Ce\ (OH)_x\ (NO_3)_y,\ pCeO_2,\ nH_2O \quad (II)$$

dans laquelle :

— x est tel que x = 4 − y
— y est compris entre 0,35 et 1,5
— p est supérieur ou égal à 0 et inférieur ou égal à 2,0
— n est supérieur ou égal à 0 et inférieur ou égal à environ 20 et obtenu selon un procédé qui consiste, dans une première étape, à hydrolyser une solution aqueuse d'un sel de cérium IV en milieu acide : le rapport molaire [H+]/[CeIV éq.] est supérieur ou égal à 0 et inférieur ou égal à 3 ; dans une deuxième étape à séparer le précipité obtenu et éventuellement dans une troisième étape à le traitement thermiquement.

38. Procédé selon la revendication 37 caractérisé par le fait que le rapport molaire [H+]/[CeIV éq.] est compris entre 0,4 et 2,5.

39. Procédé selon l'une des revendications 37 et 38 caractérisé par le fait que l'on effectue une étape de séchage.

**Patentansprüche**

1. Verfahren zur Herstellung eines Ceroxids mit geregelter Korngrößenverteilung, bestehend darin, daß man eine wäßrige Lösung eines Cer-IV-salzes in saurem Medium in Gegenwart einer kolloidalen wäßrigen Dispersion einer Cer-IV-verbindung hydrolysiert, den erhaltenen Niederschlag abtrennt und ihn dann einer Wärmebehandlung unterwirft.

2. Verfahren nach Anspruch 2, dadurch gekennzeichnet, daß die wäßrige Lösung eines Cer-IV-salzes eine wäßrige Lösung von Cer-IV-nitrat ist.

3. Verfahren nach einem der Ansprüche 1 und 2, dadurch gekennzeichnet, daß die wäßrige Lösung eines Cer-IV-salzes eine Lösung ist, die aus der elektrochemischen Oxidation einer Lösung von Cer-III-nitrat stammt oder eine Lösung, die durch Einwirkung von Salpetersäure auf ein Ceroxid-Hydrat erhalten worden ist.

4. Verfahren nach einem der Ansprüche 1 bis 3, dadurch gekennzeichnet, daß die Konzentration der Cersalzlösung, angegeben als Cer-IV, 0,3 bis 3 mol/l beträgt.

5. Verfahren nach einem der Ansprüche 1 bis 4, dadurch gekennzeichnet, daß das Hydrolysemedium destilliertes oder mit Ionenaustauscher behandeltes Wasser ist.

6. Verfahren nach einem der Ansprüche 1 bis 5, dadurch gekennzeichnet, daß das Molverhältnis [H+]/[CeIV Äq.] größer oder gleich 0 und kleiner oder gleich 3 ist.

7. Verfahren nach Anspruch 6, dadurch gekennzeichnet, daß dieses Verhältnis im Bereich von 0 bis 2,0 liegt.

8. Verfahren nach Anspruch 6, dadurch gekennzeichnet, daß die Acidität durch Salpetersäure zugeführt wird.

9. Verfahren nach Anspruch 6, dadurch gekennzeichnet, daß die Acidität durch eine Lösung von Cernitrat mit einer Acidität von 0,01 n bis 5 n zugeführt wird.

10. Verfahren nach einem der Ansprüche 1 bis 9,dadurch gekennzeichnet, daß das Verhältnis zwischen wäßriger Lösung eines Cer-IV-salzes und dem Hydrolysemedium so beschaffen ist, daß die Äquivalent-Endkonzentration an Cer-IV 0,1 bis 1,0 mol/l beträgt.

11. Verfahren nach Anspruch 10, dadurch gekennzeichnet, daß die Äquivalent-Endkonzentration an Cer-IV 0,2 bis 0,6 mol/l beträgt.

12. Verfahren nach einem der Ansprüche 1 bis 11, dadurch gekennzeichnet, daß die Temperatur des Reaktionsmediums im Bereich von etwa 70 bis 120°C liegt.

13. Verfahren nach Anspruch 12, dadurch gekennzeichnet, daß die Temperatur des Reaktionsmediums seine Rückflußtemperatur ist.

14. Verfahren nach einem der Ansprüche 12 und 13, dadurch gekennzeichnet, daß man auf einmal,stufenweise oder kontinuierlich die Lösung von Cer-IV-salz in Wasser, die gegebenenfalls Säure enthält (und) auf die Reaktionstemperatur gebracht worden ist, zusetzt.

15. Verfahren nach einem der Ansprüche 12 und 13, dadurch gekennzeichnet, daß man die Lösung des Cer-IV-salzes und das Hydrolysemedium vermischt und dann dieses Gemisch unter Rühren auf die Reaktionstemperatur bringt.

16. Verfahren nach einem der Ansprücbe 12 und 13, dadurch gekennzeichnet, daß man gleichzeitig und kontinuierlich die Lösung von Cer-IV-salz und das Hydrolysemedium miteinander vermischt und daß man kontinuierlich das Gemisch auf die Reaktionstemperatur erhitzt.

17. Verfahren nach Anspruch 1, dadurch gekennzeichnet, daß die eingesetzte kolloidale wäßrige Dispersion der Cer-IV-verbindung der allgemeinen Formel (I)

$$Ce\ (M)_z\ (OH_x)\ (NO_3)_y,\ pCeO_2,\ nH_2O \quad (I)$$

entspricht, in der:
- M ein Alkalimetall oder einen quaternären Ammoniumrest bedeutet,
- z im Bereich von 0 bis 0,2 liegt,
- y im Bereich von 0 bis 1,5 liegt,
- x so ist, daß $x = 4 - y + z$,
- p im Bereich von 0 bis 2,0 liegt,
- n im Bereich von 0 bis etwa 20 liegt.

18. Verfahren nach Anspruch 17, dadurch gekennzeichnet, daß die Konzentration der Cer-IV-verbindung in der kolloidalen Dispersion 0,1 bis 2,5 mol/l beträgt.

19. Verfahren nach Anspruch 18, dadurch gekennzeichnet, daß diese Konzentration im Bereich von 0,5 bis 1 mol/l liegt.

20. Verfahren nach Anspruch 17, dadurch gekennzeichnet, daß der Gebalt an Cer in kolloidaler Form in der Dispersion 99 bis 100% beträgt.

21. Verfahren nach Anspruch 17, dadurch gekennzeichnet, daß die Kolloide einen mittleren hydrodynamiscben Durchmesser zwischen 50 und 2000 Å aufweisen.

22. Verfahren nach einem der Ansprüche 1 bis 21, dadurch gekennzeichnet, daß die Menge an waßrigem Sol einer Cer-IV-verbindung, ausgedrückt im Verhältnis zur Menge an Cer-IV-salz, angegeben als $CeO_2$, 0,1 bis 20 Gew.-% ausmacht.

23. Verfahren nach Anspruch 22, dadurch gekennzeichnet, daß diese Menge 1 bis 5 Gew.-% ausmacht.

24. Verfahren nach einem der Ansprüche 1 bis 23, dadurch gekennzeichnet, daß das wäßrige Sol einer Cer-IV-verbindung in das auf eine Temperatur von mindestens 70°C gebrachte Reaktionsmedium eingebracht wird.

25. Verfahren nach Anspruch 24, dadurch gekennzeichnet, daß die Temperatur 75 bis 100°C beträgt.

26. Verfahren nach einem der Ansprüche 1 bis 25, dadurch gekennzeichnet, daß die Dauer der Hydrolysereaktion 2 bis 8 h beträgt.

27. Verfahren nach Anspruch 1, dadurch gekennzeichnet, daß man eine Trocknungsstufe an der Luft oder unter vermindertem Druck in der Größenordnung von 1 bis 100 mm Hg bei einer Temperatur im Bereich von 15 bis 100°C vornimmt.

28. Verfahren nach Anspruch 27, dadurch gekennzeichnet, daß die Dauer des Trocknens 5 bis 48 h beträgt.

29. Verfahren nach Anspruch 1, dadurch gekennzeichnet, daß man den abgetrennten Niederschlag mittels einer Behandlung der Lyophilisierung trocknet.

30. Verfahren nach Anspruch 29, dadurch gekennzeichnet, daß diese Behandlung darin besteht, daß man auf −10 bis −30°C tieffriert und dann unter vermindertem Druck zwischen 0,001 und 0,5 atm sublimiert.

31. Verfahren nach einem der Ansprüche 1 bis 30, dadurch gekennzeichnet, daß man eine Brennstufe bei einer Temperatur im Bereich von 300 bis 1000°C durchführt.

32. Verfahren nach Anspruch 31, dadurch gekennzeichnet, daß die Brenntemperatur im Bereich von 350 bis 800°C liegt.

33. Verfahren nach einem der Ansprüche 31 und 32, dadurch gekennzeichnet, daß die Brenndauer 30 min bis 10 h beträgt.

34. Ceroxid, dadurch gekennzeichnet, daß es einen mittleren Durchmesser der Aggregate im Bereich von 0,2 bis 1 μm und einen Index der Verteilung der Größe der Aggregate im Bereich von 0,3 bis 0,5 aufweist, wobei dieser Index durch den Ausdruck

$$\frac{d_{84} - d_{16}}{2d_{50}}$$

bestimmt ist.

35. Ceroxid nach Anspruch 34, dadurch gekennzeichnet, daß der mittlere Durchmesser der Aggregate 0,2 bis 0,4 µm beträgt.

36. Ceroxid nach Anspruch 34, dadurch gekennzeichnet, daß der Index im Bereich von 0,3 bis 0,4 liegt.

37. Verfahren zur Herstellung des in einem der Ansprüche 34 bis 36 beschriebenen Ceroxids gemäß dem in einem der Ansprüche 1 bis 33 beschriebenen Verfahren, dadurch gekennzeichnet, daß man eine wäßrige kolloidale Dispersion einer Cer-IV-verbindung einsetzt, die hergestellt worden ist durch ist durch Dispergieren in Wasser einer Cer-IV-verbindung, die der allgemeinen Formel (II)

$$Ce\,(OH)_x\,(NO_3)_y,\,pCeO_2,\,nH_2O$$

entspricht, in der :

— x so ist, daß x = 4 − y,
— y im Bereich von 0,35 bis 1,5 liegt,
— p größer oder gleich 0 und kleiner oder gleich 2,0 ist,
— n größer oder gleich 0 und kleiner oder gleich etwa 20 ist, und die gemäß einem Verfahren erhalten worden ist, welches darin besteht, daß man in einer ersten Stufe eine wäßrige Lösung eines Cer-IV-salzes in saurem Medium hydrolysiert, wobei das Molverhältnis [H⁺]/[Ce$^{IV}$ Äq.] größer oder gleich 0 und kleiner oder gleich 3 ist, daß man in einer zweiten Stufe den erhaltenen Niederschlag abtrennt und ihn gegebenenfalls in einer dritten Stufe thermisch behandelt.

38. Verfahren nach Anspruch 37, dadurch gekennzeichnet, daß das Molverhältnis [H⁺]/[Ce$^{IV}$ Äq.] 0,4 bis 2,5 beträgt.

39. Verfahren nach einem der Ansprüche 37 und 38, dadurch gekennzeichnet, daß man eine Trocknungsstufe anschließt.

## Claims

1. A process for the preparation of a ceric oxide of controlled granulometry comprising hydrolysing an aqueous solution of a cerium (IV) salt in an acid medium in the presence of an aqueous colloidal dispersion of a cerium (IV) compound ; separating the precipitate obtained ; and then subjecting it to a heat treatment.

2. A process according to claim 1 characterised in that the aqueous solution of cerium (IV) salt is an aqueous solution of ceric nitrate.

3. A process according to one of claims 1 and 2 characterised in that the aqueous solution of cerium (IV) salt is a solution resulting from the electrochemical oxidation of a solution of cerous nitrate or a solution obtained by the action of nitric acid on a hydrated ceric oxide.

4. A process according to one of claims 1 to 3 characterised in that the concentration of the solution of cerium salt expressed as cerium (IV) is between 0.3 and 3 moles per litre.

5. A process according to one of claims 1 to 4 characterised in that the hydrolysis medium is distilled or permuted water.

6. A process according to one of claims 1 to 5 characterised in that the molar ratio [H₊]/[Ce$^{IV}$ eq.] is higher than or equal to 0 and lower than or equal to 3.

7. A process according to claim 6 characterised in that said ratio is between 0 and 2.0.

8. A process according to claim 6 characterised in that acidity is afforded by nitric acid.

9. A process according to claim 6 characterised in that acidity is afforded by a solution of ceric nitrate having an acidity of 0.01 N to 5 N.

10. A process according to one of claims 1 to 9 characterised in that the proportion between the aqueous solution of cerium (IV) salt and the hydrolysis medium is such that the final equivalent concentration of cerium (IV) is between 0.1 and 1.0 mole/litre.

11. A process according to claim 10 characterised in that the final equivalent concentration of cerium (IV) is between 0.2 and 0.6 mole/litre.

12. A process according to one of claim 1 to 11 characterised in that the temperature of the reaction medium is between 70°C and 120°C approximately.

13. A process according to claimr 12 characterised in that the temperature of the reaction medium is the temperature of its reflux.

14. A process according to one of claims 12 and 13 characterised in that the solution of cerium (IV) salt in water which possibly contains acid and is raised to the reaction temperature, is added in a single batch, gradually or continuously.

15. A process according to one of claims 12 and 13 characterised in that the solution of cerium (IV) salt and the hydrolysis medium are mixed and then said mixture itch is maintained in an agitated condition is raised to the reaction temperature.

16. A process according to one of claims 12 and 13 characterised by effecting simultaneously and continuously mixing of the solution of cerium (IV) salt and the hydrolysis medium and continuously heating the mixture to the reaction temperature.

17. A process according to claim 1 characterised in that the aqueous colloidal dispersion of the cerium (IV) compound used corresponds to the general formula (I) :

$$Ce\,(M)_z\,(OH)_x\,(NO_3)_y,\,pCeO_2,\,nH_2O \quad (I)$$

wherein :
— M represents an alkali metal or a quaternary ammonium radical
— z is between 0 and 0.2
— y is between 0 and 1.5
— x is such that $x = 4 - y + z$
— p is between 0 and 2.0
— n is between 0 and about 20.

18. A process according to claim 17 characterised in that the concentration of the cerium (IV) compound in said colloidal dispersion varies between 0.1 and 2.5 moles/litre.

19. A process according to claim 18 characterised in that said concentration is between 0.5 and 1 mole/litre.

20. A process according to claim 17 characterised in that the proportion of cerise in colloidal form in said dispersion is between 99 and 100%.

21. A process according to claim 17 characterised in that the colloids have a mean hydrodynamic diameter which varies between 50 and 2000 Å.

22. A process according to one of claims 1 to 21 characterised in that the amount of aqueous sol of a cerise (IV) compound expressed with respect to the amount of the cerium (IV) salt, expressed as $CeO_2$, varies between 0.1 and 20% by weight.

23. A process according to claim 22 characterised in that said amount is between 1 and 5% by weight.

24. A process according to one of claims 1 to 23 characterised in that the aqueous sol of a cerium (IV) compound is introduced into the reaction medium itch is raised to a temperature of at least 70°C.

25. A process according to claim 24 characterised in that said temperature is between 75°C and 100°C.

26. A process according to one of claims 1 to 25 characterised in that the duration of the hydrolysis reaction varies between 2 and 8 hours.

27. A process according to claim 1 characterised by effecting a drying step in air or under a reduced pressure of the order of from 1 to 100 mm of mercury at a temperature of between 15°C and 100°C.

28. A process according to claim 27 characterised in that the duration of the drying operation varies between 5 and 48 hours.

29. A process according to claim 1 characterised by effecting drying of the separated precipitate by a lyophilisation treatment.

30. A process according to claim 29 characterised in that said treatment comprises effecting freezing at between −10°C and −30°C, then sublimation under a reduced pressure of between 0.001 and 0.5 atmosphere.

31. A process according to one of claims 1 to 30 characterised by effecting a calcination step at a temperature of between 300°C and 1000° C.

32. A process according to claim 31 characterised in that the calcination temperature is between 350°C and 800°C.

33. A process according to one of claims 31 and 32 characterised in that the duration of the calcination operation varies between 30 minutes and 10 hours.

34. A ceric oxide characterised in that it has a mean diameter of the aggregates itch varies betweenn 0. 2 and 1 μm and a dispersion index in respect of the size of the aggregates itch varies between 0.3 and 0.5, said index being determined by the expression :

$$\frac{d_{84} - d_{16}}{2d_{50}}$$

35. A ceric oxide according to claim 34 characterised in that said mean aggregate diameter is between 0.2 and 0.4 μm.

36. A ceric oxide according to claim 34 characterised in that said index is between 0.3 and 0.4.

37. A process for producing the ceric oxide set forth in one of claims 34 to 36 in accordance with the process set forth in one of claims 1 to 33 characterised in that it comprises using an aaueous colloidal dispersion of a cerium (IV) compound prepared by dispersion in water of a cerium (IV) compound corresponding to the formula (II) :

$$Ce\,(OH)_x\,(NO_3)_y,\,pCeO_2,\,nH_2O \quad (II)$$

wherein :
— x is such that $x = 4 - y$
— y is between 0.35 and 1.5
— p is grater than or equal to 0 and less than or equal to 2.0 and
— n is grater than or equal to 0 and less than or equal to about 20,
and obtained by a process which comprises in a first step hydrolysing an aqueous solution of a cerium (IV) salt in an acid medium : the molar ratio $[H^+]/[Ce^{IV} eq.]$ is higber than or equal to 0 and lower than or equal to 3 ; and in a second step separating the precipitate obtained and optionally in a third step subjecting it to a heat treatment.

38. A process according to claim 37 characterised in that the molar ratio $[H^+]/[Ce^{IV} eq.]$ is between 0.4 and 2.5.

39. A process according to one of claims 37 and 38 characterised by effecting a drying step.